Europäisches Patentamt

European Patent Office

Office européen des brevets

(11) Veröffentlichungsnummer: **0 376 379 A2**

# EUROPÄISCHE PATENTANMELDUNG

(21) Anmeldenummer: 89203229.3

(51) Int. Cl.5: **G02B 6/44**

(22) Anmeldetag: **18.12.89**

(30) Priorität: 24.12.88 DE 3843778

(43) Veröffentlichungstag der Anmeldung:
**04.07.90 Patentblatt 90/27**

(84) Benannte Vertragsstaaten:
**DE FR GB IT**

(71) Anmelder: **Philips Patentverwaltung GmbH
Wendenstrasse 35 Postfach 10 51 49
D-2000 Hamburg 1(DE)**

(84) **DE**

Anmelder: **N.V. Philips' Gloeilampenfabrieken
Groenewoudseweg 1
NL-5621 BA Eindhoven(NL)**

(84) **FR GB IT**

(72) Erfinder: **Brüggendieck, Siegfried
Peter Walterscheidstrasse 19
D-5060 Bergisch Gladbach(DE)**

(74) Vertreter: **Koch, Ingo, Dr.-Ing. et al
Philips Patentverwaltung GmbH
Wendenstrasse 35 Postfach 10 51 49
D-2000 Hamburg 1(DE)**

(54) Verfahren zur Herstellung einer optischen Leitung.

(57) Die Erfindung betrifft ein Verfahren zur Herstellung einer optischen Leitung, bei welcher mindestens ein LWL (4,11,15,19) in einer Hülle (3,9,13,18) mit Überlänge verläuft und durch Verlagerungselemente (7,8,12,20) gegenüber der Hülle festgelegt ist. Ohne aufwendige Fertigungseinrichtungen wird die Einstellung einer genau definierten Überlänge eines oder mehrerer LWL dadurch ermöglicht, daß die Verlagerungselemente (7,8,12,20) vor oder beim Einlegen in die Hülle (3,9,13,18) auf die LWL (4,11,15,19) aufgebracht werden und daß die LWL durch auf die Hülle (3,9,18) wirkende Abzugskräfte eingezogen werden.

Fig. 1

## Verfahren zur Herstellung einer optischen Leitung

Die Erfindung bezieht sich auf ein Verfahren zur Herstellung einer optischen Leitung, bei welcher mindestens ein LWL in einer Hülle mit Überlänge verläuft und durch Verlagerungselemente gegenüber der Hülle festgelegt ist.

Bei einem durch die US-A 40 39 248 bekannten Verfahren dieser Art wird ein LWL mittels einer schiebenden Fördereinrichtung mit einer solchen Überlänge in eine extrudierte Hülle gedrückt, daß der LWL innerhalb der Hülle gewellt verläuft. Danach werden die LWL gegenüber der Hülle in der gewellten Lage fixiert, beispielsweise mittels in Abständen durch Zuführungsöffnungen der Hülle eingespritzter elastischer geschäumter Körper. Die Antriebsgeschwindigkeit der Fördereinrichtung muß genau an die Extrusionsgeschwindigkeit angepaßt werden. Ein schiebendes Einbringen eines LWL in eine Hülle bereitet Schwierigkeiten, weil bereits vor der Hülle eine unkontrollierte Knickung hervorgerufen werden kann.

Ebenso wie Einzel-LWL müssen auch LWL-Flachbänder, bei welchen mehrere LWL nebeneinander zu einem LWL-Flachband verbunden sind, mit Überlänge in einer Hülle angeordnet werden können. Auch Stapel von LWL-Flachbändern, welche tordiert in einer Hülle verlaufen, sollen vorzugsweise zusätzlich zur Bildung einer Überlänge gewellt oder gewendelt verlaufen (vgl. Patentanmeldung P 38 02 867.0).

Der Erfindung liegt die Aufgabe zugrunde, ein Verfahren der eingangs genannten Art anzugeben, welches ohne aufwendige Fertigungseinrichtungen eine definierte Überlängenlage eines oder mehrerer LWL bei zuverlässig vorgebbarem Ausmaß der Überlänge ermöglicht.

Die Lösung gelingt dadurch, daß die Verlagerungselemente vor oder beim Einlegen in die Hülle auf den LWL aufgebracht werden und daß der LWL durch auf die Hülle wirkende Abzugskräfte eingezogen wird.

Beim erfindungsgemäßen Verfahren können LWL ohne stauchendes Schieben in herkömmlicher Weise gemeinsam mit der Hülle gezogen werden. Dabei auf die LWL einwirkende Abzugskräfte sollen möglichst klein sein, damit die weichen Verlagerungselemente nicht bereits beim Fertigungsablauf verformt werden, wodurch ein Teil der Überlänge durch Vorstreckung der LWL aufgehoben werden könnte.

Die Verlagerungselemente können vorteilhaft durch axial in die Hülle reichende Spritzdüsen aufgebracht werden. Dann brauchen in der Hülle keine Einführungsöffnungen vorgesehen sein.

Wenn die Verlagerungselemente in verschiedenen Winkelpositionen aufgebracht werden, können die LWL gewendelt in der Hülle geführt werden. Bei einer besonders einfach zu verwirklichenden Lösung ist vorgesehen, daß die Verlagerungselemente abwechselnd in um 180° unterschiedlicher Winkelposition aufgebracht werden. Dann ergibt sich eine gewellte Lage des LWL.

Beim erfindungsgemäßen Verfahren kann ein einziger LWL, ein Bündel von LWL, ein LWL-Flachband oder auch ein Stapel von LWL-Flachbändern vorgesehen sein.

Im Falle eines LWL-Flachbandes ist vorgesehen, daß die Verlagerungselemente auf die Breitseite eines LWL-Flachbandes aufgebracht werden.

Wenn eine gewellte Lage des LWL-Flachbandes bewirkt werden soll, müssen die Überlagerungselemente abwechselnd auf gegenüberliegenden Breitseiten des LWL-Flachbandes verteilt werden. Bei gewünschter gewendelter Lage sind Verlagerungselemente auf nur einer Breitseite eines tordierten LWL-Flachbandes zu verteilen.

Gleiche Gesichtspunkte gelten auch, wenn statt eines einzigen LWL-Flachbandes ein Stapel aus mehreren aufeinandergeschichteten LWL-Flachbändern mit Überlänge in einer gemeinsamen Hülle eingebracht werden soll.

Bei einer alternativen Ausführungsform des erfindungsgemäßen Verfahrens ist vorgesehen, daß die Verlagerungselemente auf sämtliche LWL-Flachbänder einer Mehrzahl von in einer Hülle geführten LWL-Flachbändern aufgebracht werden. Dabei können die Verlagerungselemente bereits unabhängig vom Extrudiervorgang der Hülle auf die einzelnen LWL-Flachbänder aufgebracht werden. Die Dicke der Verlagerungselemente ist dabei so zu wählen, daß sich bei gestrecktem Verlauf einer Gruppe von aufeinandergelegten und mit Überlagerungselementen versehenen LWL-Flachbändern eine Hüllkontur ergibt, deren Außenmaße den Innendurchmesser der aufzubringenden Hülle überschreiten. Dann wird der Stapel beim Einführen in die Hülle derart zusammengedrückt, daß die einzelnen LWL-Flachbänder einen gewellten Verlauf einnehmen.

Die Erfindung wird anhand der Zeichnung näher erläutert.

Fig. 1 zeigt wesentliche Elemente einer Vorrichtung zum erfindungsgemäßen Einbringen eines LWL in eine aus Metall geformte Hülle.

Fig. 2 erläutert ein abgewandeltes erfindungsgemäßes Verfahren zum Einbringen eines LWL in eine extrudierte Hülle.

Fig. 3 zeigt einen Querschnitt durch ein erfindungsgemäß mit einem Stapel von LWL-Flachbändern hergestelltes optisches Kabel.

Fig. 4 zeigt einen Querschnitt durch ein in abgewandelter Form erfindungsgemäß mit einem Stapel von LWL-Flachbändern hergestelltes optisches Kabel.

Fig. 5 zeigt einen Längsschnitt durch ein mehrere LWL-Flachbänder enthaltendes optisches Kabel, bei welchem sämtliche LWL-Flachbänder mit Verlagerungselementen versehen sind.

Mittels einer angedeuteten üblichen Formungseinrichtung 1 wird aus einem Edelstahlstreifen 2 ein Rohr geformt und an der Nahtstelle verschweißt zu einem Metallrohr 3, welches eine Hülle für einen LWL 4 bildet.

Beim Ziehen des Metallrohrs 3 aus der Formungseinrichtung 1 wird der LWL 4 mit geringer Abzugskraft von einer nicht dargestellten Vorratsrolle abgezogen. Durch eine obere Einspritzdüse 5 und durch eine untere Einspritzdüse 6, welche axial in den gerade gebildeten Abschnitt des Metallrohrs 3 hineinragen, werden Stopfen 7 bzw. 8 gebildet. Durch das Einspritzen wird der LWL zur Innenfläche des Metallrohrs hin verlagert, so daß sich ein gewellter Verlauf einstellt. Vorzugsweise bestehen die Stopfen 7 und 8 aus weichem nachgiebigem Schaumstoff.

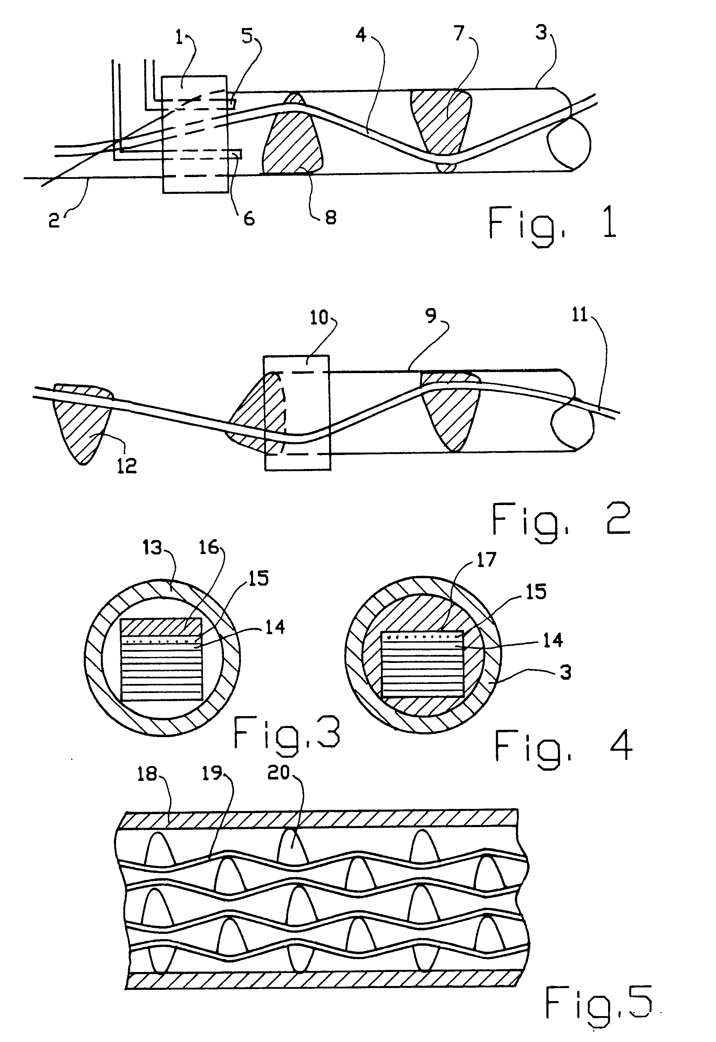

Bei der Ausführung nach Fig. 1 könnte eine einzige Einspritzdüse 5 vorgesehen sein, welche um die Mittelachse des Metallrohrs 3 drehbar und in um 180° wechselnden Lagen eingestellt werden kann. Weiterhin ist es möglich, in kleineren Differenzwinkellagen Stopfen zu bilden, so daß der LWL 4 in eine gewendelte Lage gebracht wird.

Gemäß Fig. 2 wird eine Hülle 9 mittels des angedeuteten Extruders 10 extrudiert. Der mit der Hülle abgezogene LWL 11, welcher wiederum mit geringer Abzugskraft von einer nicht dargestellten Vorratsrolle abläuft, wurde vor dem Einlaufen in die Hülle 9 mit in um 180° gegeneinander verdrehter Lage aufgebrachten Verlagerungselementen 12 versehen.

Die anhand der Figuren 1 und 2 für den Fall eines einzigen LWL erläuterten Verfahrensweisen können selbstverständlich auch für Bündel von LWL, für LWL-Flachbänder oder für Stapel von LWL-Flachbändern Anwendung finden.

In Fig. 3 ist ein Querschnitt einer optischen Leitung angedeutet, bei welcher in einer Hülle 13 zehn LWL-Flachbänder 14 als Stapel verlaufen. Jedes LWL-Flachband 14 enthält zehn in einer Ebene aneinander geklebte LWL 15. Ein gemäß Fig. 2 hergestelltes Verlagerungselement 16 verlagert den Stapel in der Hülle 13 außermittig nach unten. Ein nachfolgend um 180° gegenüberliegend aufgebrachtes Verlagerungselement verlagert den Stapel nach oben, so daß dann der gesamte Stapel einen gewellten Verlauf annimmt.

Wenn im Falle eines tordierten Stapels die Verlagerungselemente 16 nur einseitig angebracht werden, überlagert sich der Tordierung ein gewendelter Verlauf des Stapels von LWL-Flachbändern.

In Fig. 4 ist ein gegenüber Fig. 3 alternatives Verlagerungselement erkennbar, welches gemäß Fig. 1 als Stopfen 17 hergestellt wurde und gleichzeitig eine gegen Längswasser abdichtende Funktion erfüllt. Die weiteren Elemente entsprechen denen der Fig. 3.

Nach Fig. 5 sind in einer Hülle 18 vier LWL-Flachbänder 19 in gewellter Lage geführt. Die Wellung wird durch auf jedes der LWL-Flachbänder vorher aufgebrachte Noppen oder Streifen 20 bewirkt, welche lediglich auf dem unteren LWL-Flachband 19 beidseitig aufgebracht wurden, damit auch dieses einen gewellten Verlauf annimmt. Es ist nicht erforderlich, daß die Noppen mit absolut gleichmäßigem Abstand aufeinanderfolgen. Die Relativlage der auf den verschiedenen LWL-Flachbändern 19 aufgebrachten Noppen 20 braucht nicht gleichmäßig oder symmetrisch zu sein. Statistisch verteilte Unregelmäßigkeiten haben sich sogar als vorteilhaft erwiesen.

Abstände und Dicken der Noppen können derart vorausbestimmt werden, daß sich ein gewünschtes Maß der Überlänge der LWL-Flachbänder 19 einstellt.

Bei den Ausführungsarten nach den Fig. 1 bis 4 wird das Ausmaß der Überlänge bei gegebenem Innendurchmesser der Hülle 3 vornehmlich durch den Abstand der Verlagerungselemente 7 und 8 bzw. 12 bestimmt.

## Ansprüche

1. Verfahren zur Herstellung einer optischen Leitung, bei welcher mindestens ein LWL (4,11,15,19) in einer Hülle (3,9,13,18) mit Überlänge verläuft und durch Verlagerungselemente (7,8,12,20) gegenüber der Hülle festgelegt ist, dadurch gekennzeichnet, daß die Verlagerungselemente (7,8,12,20) vor oder beim Einlegen in die Hülle (3,9,18) auf die LWL (4,11,15,19) aufgebracht werden und daß die LWL durch auf die Hülle (3,9,13,18) wirkende Abzugskräfte eingezogen werden.

2. Verfahren nach Anspruch 1, dadurch gekennzeichnet, daß die Verlagerungselemente (7,8) durch axial in die Hülle (3) reichende Spritzdüsen (5,6) aufgebracht werden.

3. Verfahren nach Anspruch 1 oder 2, dadurch gekennzeichnet, daß die Verlagerungselemente (7,8,12,20) in verschiedenen Winkelpositionen aufgebracht werden.

4. Verfahren nach Anspruch 3, dadurch gekennzeichnet, daß die Verlagerungselemente (7,8,12,20) abwechselnd in um 180° unterschiedlichen Winkelpositionen aufgebracht werden.

5. Verfahren nach einem der Ansprüche 1 bis 4,
dadurch gekennzeichnet, daß die Verlagerungselemente (16,17,20) auf die Breitseite eines LWL-
Flachbandes (14,19) aufgebracht werden.

6. Verfahren nach Anspruch 5,
dadurch gekennzeichnet, daß die Verlagerungselemente (16,17,20) abwechselnd auf die Breitseiten
gegenüberliegender Rand-LWL-Flachbänder eines
Stapels von LWL-Flachbändern aufgebracht werden.

7. Verfahren nach Anspruch 5,
dadurch gekennzeichnet, daß die Verlagerungselemente (16) ausschließlich auf die Breitseite eines
äußeren LWL-Flachbandes (14) eines tordierten
Stapels aus LWL-Flachbändern aufgebracht werden.

8. Verfahren nach einem der Ansprüche 1 bis
7,
dadurch gekennzeichnet, daß die Verlagerungselemente (20) auf sämtliche LWL-Flachbänder (19)
einer Mehrzahl von in einer Hülle (18) geführten
LWL-Flachbändern aufgebracht werden.

Fig. 1

Fig. 2

Fig.3

Fig. 4

Fig.5

PHD 88-265